Europäisches Patentamt

European Patent Office

Office européen des brevets

(19)

(11) Publication number : **0 496 459 A1**

(12) **EUROPEAN PATENT APPLICATION**

(21) Application number : 92200119.3

(22) Date of filing : 11.01.92

(51) Int. Cl.⁵ : **G07F 7/10, H04L 9/32**

(30) Priority : **18.01.91 EP 91400111**

(43) Date of publication of application :
**29.07.92 Bulletin 92/31**

(84) Designated Contracting States :
**PT**

(71) Applicant : **THOMSON CONSUMER
ELECTRONICS S.A.**
**9, Place des Vosges, La Défense 5**
**F-92400 Courbevoie (FR)**

(72) Inventor : **Naccache, David**
**94B Rue du 11 Novembre 1918**
**F-94700 Maisons-Alfort (FR)**

(74) Representative : **Einsel, Robert, Dipl.-Ing.**
**Deutsche Thomson-Brandt GmbH Patent- und
Lizenzabteilung Göttinger Chaussee 76
W-3000 Hannover 91 (DE)**

(54) **Method and apparatus for access control and/or identification.**

(57)    The present invention relates to a method and to an apparatus for access control and identification which requires no public key directory.

For many applications, e.g. smart cards for pay TV purposes, credit cards, passports, dongels or other kind of electronic keys, unforgeable systems for access control or digital signature are required.

Such access control and systems may include public keys. But in many of such public key systems the key management becomes very complicated when the number of users increases.

The invention uses the fact that it is difficult to compute square roots mod n when factoring of n is unknown. The invention is based on the identity :

$$x^2\{r(x+x^{-1})\}^2 = r^2\{1+x^2\}^2 \bmod n$$

which is computed and compared using a user unit and a verifier unit.

The public key directory is replaced by a unique transmission between a sender and a receiver R of a 'sped' which will give after a proper processing both, the identity information for R and public keys.

Fig. 4

The present invention relates to a method and to an apparatus for access control and/or identification which requires no public key directory.

Background

For many applications, e.g. smart cards for pay TV purposes, credit cards, passports, dongels, military command and control systems, unforgeable systems for access control or digital signature are required.

Such access control and signature systems may include public keys. But in many public key identification and access control systems the key management becomes very complicated when the number of users increases. Typical problems are:

1) The memory size of the public directory;
2) An interaction with said directory is needed whenever users want to communicate (simultaneous access problems if the directory is not duplicated);
3) The blacklisting of invalid and old keys;
4) Adding a new member ('Allusers' update mail to the members);
5) Risks of forgery of the public directory (interchange of public keys between a victim member and a cheater). Entities might try to duplicate, playback or forge key identification devices (hereafter called 'identifiers', since they identify the carrying entity).

A famous solution to this problem of digital identification and signature has been developed in EP 0252499 and EP 0325238 by Fiat and Shamir. This method utilizes a trusted authority which issues said identifiers to eligible users. No further interaction with any center is required, neither to generate nor to verify identities and signatures. An unlimited number of users can join the system without statistically compromising its security. Interactions with identifiers do not allow forgery (outlaw production of identifiers). No user or verifier directories are needed.

This method, which practically works well, has however some theoretical lacks which compromize its security. The protocol, i.e. the flow scheme, which is disclosed in EP 0252499 and where

– U is an user, e.g. a smart card;
– V is a verifier;
– k is an integer number, e.g. in the range [1,18];
– r is a random integer number in the range [0,n);
– $(e_1 e_2 e_3 ... e_k)$ is a binary vector,

works in the following way:

An authority chooses a pseudo random function f and a modulus n = pq, where p and q are both secret primes, known only to said authority (A = B mod n is equivalent to mod (A,n) = mod (B,n) ).

In order to issue an identifier the authority:

1) prepares a string ID containing information which is unique to the entity U;
2) computes a set of values $v_{ji} = f(ID, j_i)$ for small values of $J_i$;
3) selects k values of the $v_{ji}$ which are quadratic residues mod n and computes the values $s_{ji}$ such that
$$s_{ji}^2 {}^* v_{ji} = 1 \bmod n;$$
4) issues an identifier containing ID, $j_1, j_2, ..., j_k$, $s_{J1}, s_{J2}, ..., s_{Jk}$ and n.

The identity verification protocol with the verifier V proceeds then as follows:

1) U sends ID and $j_1, j_2, ..., j_k$ to V;
2) V generates the $v_{ji}$ by computing $v_{ji} = f(ID, j_i)$ for i = 1,2,...,k;
3) U picks a random r and sends $r^2$ mod n to V;
4) V chooses a binary vector $(e_1 e_2 e_3 ... e_k)$ and sends it to U;
5) U multiplies r by each of the $s_{ji}$ values, where bit $e_i = 1$, and sends the result y to V. This is stated by:

$$y = r \prod_{e_i = 1} s_{ji} \quad \bmod n$$

For example, if the binary vector is 1100100000, then only $s_{j1}$, $s_{j2}$ and $s_{j5}$ influence $y = r^* s_{j1}^* s_{j2}^* s_{j5}$ mod n.

6) V checks that

$$r^2 = y^2 \prod_{e_i = 1} v_{ji} \quad \bmod n$$

But different attacks can be carried out which compromize this protocol:

A) If an opponent discovers only one of the $s_{ji}$ (say $s_{jc}$), then the whole system becomes vulnerable as described by the following scheme where U misrepresents himself successfully:

- U sends ID and $j_c, j_c, ..., j_c$ to V;
- V generates k times the same $v_{jc}$ since all the $j_i$ are identical;
- U picks a random r and sends $r^2$ mod r to V;
- V chooses a binary vector $(e_1 e_2 e_3 ... e_k)$ and sends it to U;
- U sends to V

$$y = r \prod_{e_i=1} s_{jc} = r s_{jc}^{(\Sigma e_i)} \bmod n$$

- V checks that

$$r^2 = y^2 \prod_{e_i=1} v_{ji} \bmod n$$

B) This attack is easier then the first one since mathematically it is easier to compute the inverse of one of the $v_{ji}$ (say $v_{jc}^{-1}$) then the inverse root $s_{jc}$. If such a value is known then there is a probability of 0.5 to crack the above mentioned known identification system:

- U sends ID and $j_c, j_c, ..., j_c$ to V;
- V generates k times the same $v_{jc}$ since all the $j_i$ are identical;
- U picks a random r and sends $r^2$ mod n to V;
- V chooses a binary vector $(e_1 e_2 e_3 ... e_k)$ and sends it to U;
- U sends to V

$$y = r(v_{jc}^{-1})^{int(\Sigma ei/2)} \bmod n;$$

- V checks that

$$r^2 = y^2 \prod_{e_i=1} v_{ji} \bmod n$$

This test will be true if $\Sigma e_i$ is even

If a pay TV verifier is public and available in any desired quantity, an opponent who uses simultaneously four verifiers, would obtain e.g. a TV program descrambled up to 94% by using attack B). If four supplementary verifiers would be added then this value is brought to 99.6% which results e.g. in a good image quality.

C) signature forgery

This attack is the most dangerous since it allows any verifier to forge signatures from only public data as follows:

- U sends ID and $j_c, j_c, ..., j_c$ to V;
- V generates k times the same $v_{jc}$ since all the $j_i$ are identical;
- U executes the following algorithm:

```
DO
    {
    r = random ()
    (e₁e₂...e_k) = f(r² mod n,m)
    α = Σ e_i
    }
WHILE (α is odd)
y = r*(v_jc⁻¹)^α/2
```

The probability not to discover such an r decreases exponentially following the law of $2^{-x}$. Typically, the probability to find a good r before x = 7 is about 99% (x is the number of iterations of the WHILE loop).
 – U sends y together with $(e_1 e_2 ... e_k)$ to V;
 – V successfully compares

$$f(y^2 \prod_{e_i=1} v_{ji}, m) \text{ and } (e_1 e_2 ... e_k).$$

The weakness resides in the fact that the $v_j$ values are considered as k different secrets and therefore forging a part of them (here 1/18, k = 18) compromizes the security of the scheme.

Invention

It is one object of the invention to disclose a method for improving the security of an access control system. This object is reached by the inventive method disclosed in claims 1 and 16.

A second object of the invention is to allow the introduction of data from previous communications between user and verifier to the next ones thereby improving the security even more.

Advantageous embodiments of the inventive method are resulting from the respective dependent claims.

Another object of the invention is to disclose a method for identification which enables any user to prove his identity. This object is reached by the inventive method disclosed in claim 16.

It is a further object of the invention to disclose an apparatus which utilizes the inventive method. This object is reached by the inventive apparatus disclosed in claims 25 and 27.

Advantageous additional embodiments of the inventive apparatus are resulting from the respective dependent claims.

The invention uses the fact that it is difficult to compute square roots mod n when factorirg of n is unknown. The invention is based on the identity:
$$x^2\{r(x + x^{-1})\}^2 = r^2\{1 + x^2\}^2 \bmod n \quad (1)$$
which is computed and compared using a user unit and a verifier unit. This equation is very hard to solve and to imitate by an unauthorized user from only public and transmitted data.

Advantageously equation (1) can be generalized to:
$$x^\varepsilon\{r(ax + bx^{-1})\}^\varepsilon = r^\varepsilon\{b + ax^2\}^\varepsilon \bmod n \quad (2)$$
in order to increase protection and to introduce more noise into the communicated data as explained below.

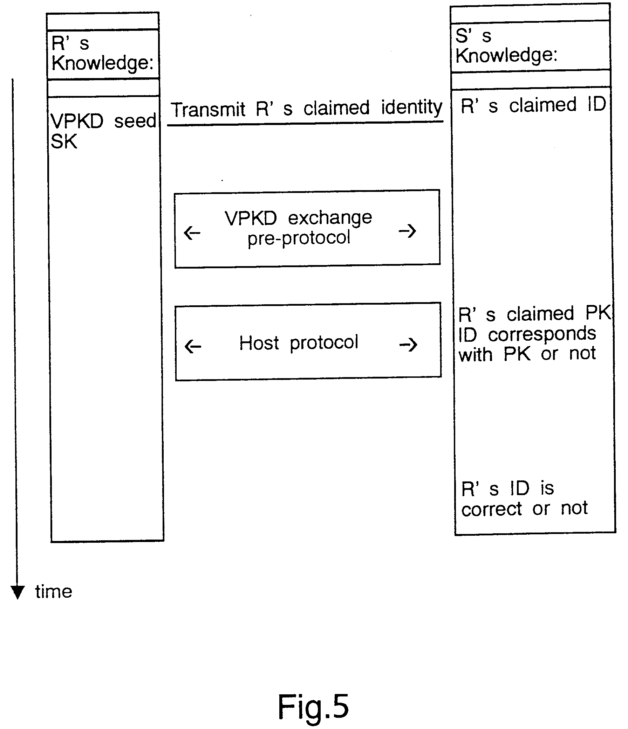

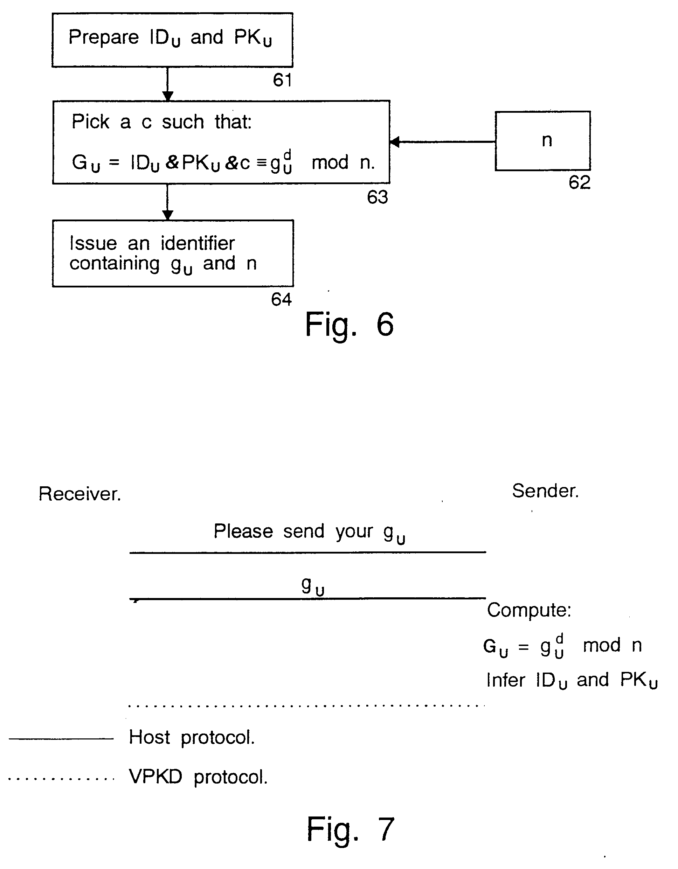

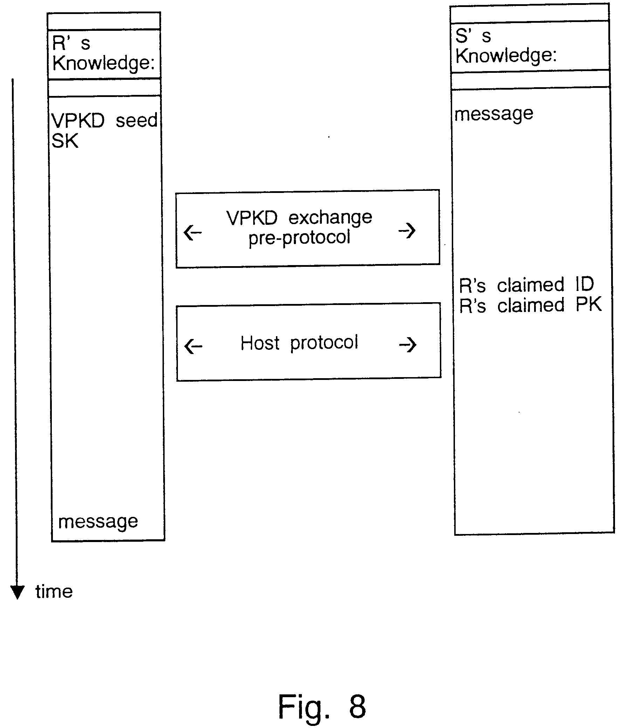

The technique described in this invention solves all the above mentioned problems in a simple way. The algorithm which requires the public directory (hereafter referred to as 'host algorithm' or 'host protocol') uses a modulus n which is the product of at least two big primes. The known public key directory is replaced by a unique transmission between an authority or a sender S and a receiver R of a 'seed' which will give after a proper processing both the identity information for R and public keys. This method we call 'Virtual Public Key Directory' or 'VPKD' for short. Advantageously the VPKD can be standarized and introduced to any security protocols requiring public moduli. New users can join the system without informing other users and verifiers and without compromizing the security of the system nor reducing its performance. Only the authority must know the factoring of n and will provide seeds. Typically a VPKD will precede the host protocol. In practice this can be understood as a preliminary secure communication that will give S public data signed by the authority. This is illustrated in Fig. 7. The evolution of knowledge between R and S is depicted in Fig. 8 for an identification system, in Fig. 5 for an access control system.

Fig. 6 explains the constructior of a VPKD pre-protocol device. In order to register a new user U the authority computes a public key $PK_U$ in such a way that $PK_U < n$ (this restriction can be removed if $PK_U$ is sliced to the right size as this is commonly done in modulo-based crypto systems) and prepares a string $ID_U$ which is unique to the physical entity U or to a given group of members and contains e.g. name, address, credit card number, date of validity. This can be done by a first unit 61. A second unit 62, e.g. a memory, contains the value n. Then the center concatenates within a third unit 63 $ID_U$ and $PK_U$ with a well chosen byte c such that $ID_U\&PK_U\&c$ has a d-th root modulo n (& stands for the concatenation operator).

We denote this root $g_U$. $g_U$ is defined by $G_U = g_U^d \bmod n$ where $G_U = ID_U\&PK_U\&c$. At manufacturing $g_U$, ID and n are recorded on a retrieval medium 64.

When S interacts with U, he sends $g_U$ to U which computes $G_U$ by raising $g_U$ to the power d, then $ID_U$ and $PK_U$ are separated and used by the host protocol.

In a typical implementation a value d=2 or d=3 may be chosen

This method can be generalized in a variety of ways:

1) The order of ID, PK, and c in G can be permuted. A nornalization will appear to be good in practice since the VPKD can be used by all different modulo based algorithms requiring public key transmissions;

2) Public or secret reversible functions for mixing and separating ID, PK and c can be used instead of simple concatenation, e.g. compression, permutation or even recurrent nested VPKD;

3) In schemes requiring k different public key values $PK_{U1}, PK_{U2}, PK_{U3}, ..., PK_{Uk}$ (for each user U), which can be permuted without compromising the functionality of the scheme (concerning the known identification system where all the $v_j$ play the same role provided that for each $s_j^2 v_j = 1 \mod n$), the use of c can even be avoided by permuting:

$$ID_U \& PK_{U1} \& PK_{U2} \& PK_{U3} \& ... \& PK_{Uk} = G_{U,1} \; ;$$
$$ID_U \& PK_{U2} \& PK_{U1} \& PK_{U3} \& ... \& PK_{Uk} = G_{U,2} \; ;$$
$$:$$
$$:$$
$$:$$
$$ID_U \& PK_{Uk} \& ... \& PK_{U3} \& PK_{U2} \& PK_{U1} = G_{U,k!} \; ,$$

until a $G_{U,\mu}$ which is a d-th power mod n is found. The probability to find no good $G_{U,\mu}$ is only

$$(3/4)^{18!} < 10^{(-ex)}, ex = 10^{14} \; ;$$

4) Checksums, random 'one way' functions, CRCs (cyclic redundancy check) and other mathematical methods can be included in G (e.g. f(ID,PK) where f maps long strings to few bytes) or in systems where a group (or all the entities) has the same ID (or no ID at all), ID can be eliminated or replaced by a constant. This is an interesting perspective in pay TV systems in which it is often desirable to address groups of subscribers.

5) ID and/or the PK can be transmitted in a plain or enciphered way along with the corresponding g in order to increase the security;

6) The simple exponentiation of g can also be replaced by a polynomial computation. For doing so the authority publishes a sequence of numbers $\Omega_i$ and computes $g_U$ in such a way that

$$ID_U \& PK_U \& c = \sum_i g_U^i \Omega_i \; .$$

The simplicity, security and speed of the method and the apparatus derive from microprocessor-based techniques which may be incorporated into smart cards, personal computers, dongles, passports and other remote systems, e.g. for pay TV purposes.

## Drawings

Preferred embodiments of the invention will now be described with reference to the accompanying drawings, in which:

Fig. 1 shows a pay TV system with scrambling and en crypting units;

Fig. 2 shows the hardware and software structure of an identifier U (smart-card);

Fig. 3 shows the hardware and software structure of a verifier V;

Fig. 4 shows an authentication protocol between a signer (smart card) and a verifier (identity control device) containing no secrets;

Fig. 5 illustrates a typical chronological evolution of knowledge detained by R and S in a communication involving a VPKD pre-protocol and an access control algorithm;

Fig. 6 shows the construction process of a VPKD preprotocol apparatus;

Fig. 7 shows a VPKD pre-protocol and a host protocol;

Fig. 8 illustrates a typical chronological evolution of knowledge detained by R and S in a communication involving a VPKD pre-protocol and an identification algorithm.

## Preferred embodiments

Satellite broadcasters are now using conditional access systems to ensure that TV programmes are available only to viewers who have fulfilled certain conditions, such as payment. Such a pay TV system may be considered as consisting of two parts:

- the scrambling system which processes the video signal in such a way, e.g. by a line cut and rotate method, that the received picture can not be recognized by unauthorized viewers;
- the encryption system which processes key signals needed to descramble the video signal.

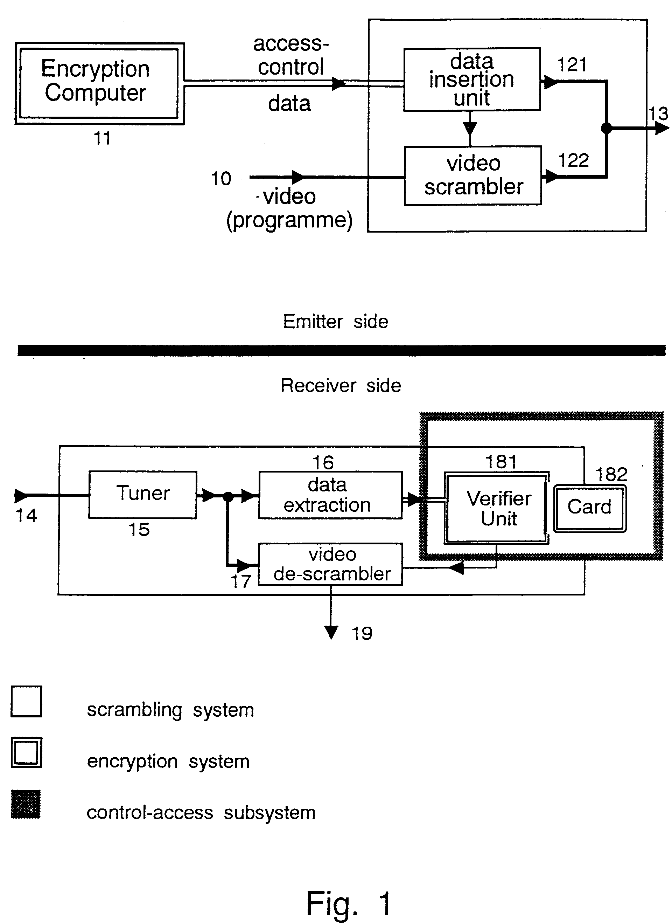

Fig.1 shows a known pay TV system, e.g. the Videocrypt system. The incoming studio video signal 10 is scrambled in a video scrambler 122 which is controlled by a data insertion unit 121. This data insertion unit receives access control data from an encryption computer 11 and inserts in the vertical blanking interval of the video signal data which allow an authorized decoder to descramble the video signal. The RF modulated output signal 13 of the emitter side is the input signal 14 at the receiver side.

This input signal becomes demodulated in a tuner 15 and is fed to a data extraction unit 16 and to a video descrambler 17. The access control data out of data extraction circuit are evaluated in a verifier unit 181 if a smart card 182 is inserted. The output signal of the verifier unit controls the video descrambler 17.

The lines of the video signal which shall be scrambled consist of a first segment and a second segment. These two segments are separated by a cut point cp. There are e.g. 256 different cut points within each line available. A whole line may consist of 958 samples of the digitized luminance and chrominance signal, respectively.

The cut point is defined at each line by a pseudo-random binary sequence (PRBS). The two line segments then become rotated within the line, i.e. they change their position within the line. The according location of the cut point cp varies respectively within the lines of each TV picture. It is the task of the descrambling system in the receiver to restore the original positions of the two segments. The encrypted data necessary to do this job may be inserted in the vertical blanking interval.

In order to descramble the TV signal the decoders include the same PRBS generator (in verifier unit 181) as the emitter (in encrypting computer 11). Both generators are initialized with the same control binary sequence, e.g. a control word. This control word is charged every few seconds and transmitted in encrypted form simultaneously to all the decoders.

The PRBS generator may output two 8 bit words. These words can mark the cut points cp in a luminance and in a chrominance line, respectively, as follows:

```
Byte    Cut Point is at sample


  0           224

 cp           224 + 2cp

255           734
```

Before issuing identifiers, the authority chooses and makes public a modulus n and a power $\varepsilon$ (typically $\varepsilon=2$) known to all those who might have to check identities or signatures. Then the center (i.e. the authority) produces for all the authorized members VPKD devices, containing k small (typically between 1 and 5 bytes) public key values $PK_j$ so that each $PK_j$ has $\varepsilon$-roots mod n (hereafter denoted $SK_j^{-1}$) whereby $PK_j$ is not a perfect square in N. If possible, prime $PK_j$ values must be chosen.

In implementations where $\varepsilon \neq 2$ (not equal) means for communicating $SK_j^{-2}$ to V must be found as well (VPKD, public directory, etc.).

When this is done the authority records on a retrievable medium the identifier U containing g, n, $\varepsilon$ and the respective $SK_j$ values.

For a typical implementation the following values are suggested:

- twenty values PK of 2 bytes each;
- a 128-bit ID and a 8-byte checksum or $ID\&PK_1\&PK_2\&...\&PK_{20}$;
- $|n| = 512$ bits.

Optionally, one can add into the identifier a couple of any algebraic or electronic functions a and b as indicated in equation (2). But if this is done a and b must as well be known to the verifiers. Advantageously in typical small implementations (e.g. smart-cards) both, a and b, are constants with a value '1', but in a more powerful system (e.g. dongle) a and b can be any couple of functions.

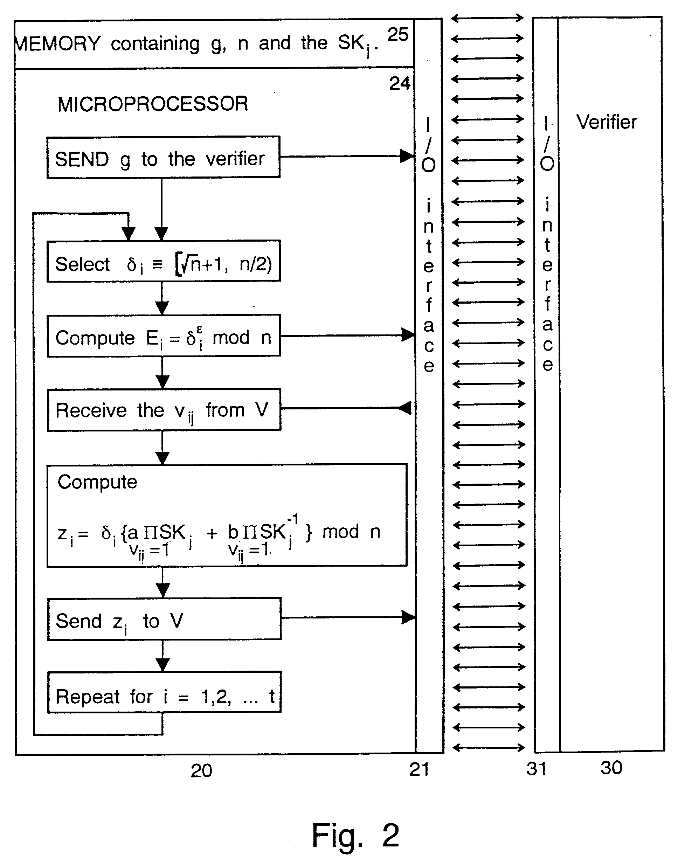

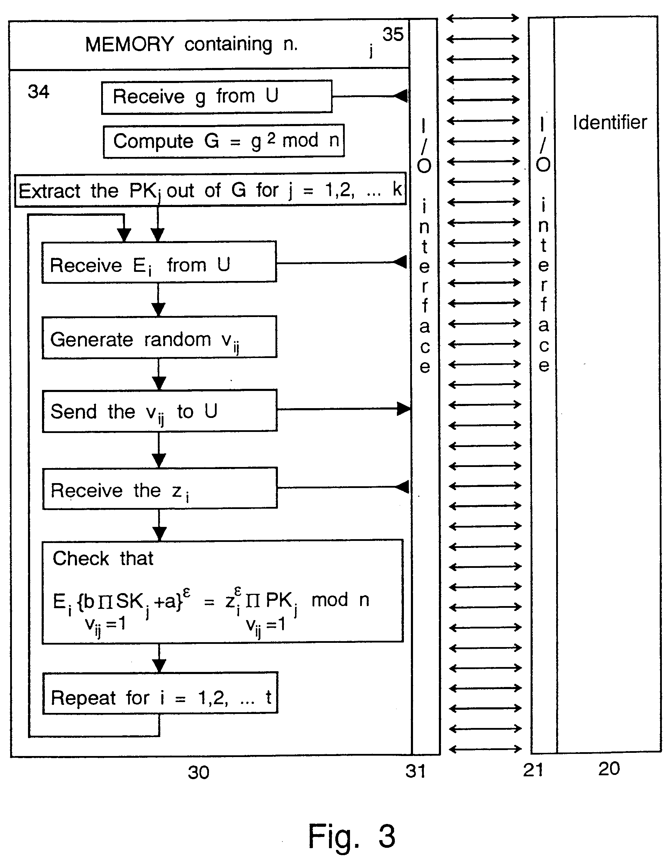

A typical access control implementation is depicted in Fig. 2 and Fig. 3. A smart-card 20 (i.e. the identifier U) is connected with its I/O interface 21 to the I/O interface 31 of a verifier unit 30. Smart-card 20 contains e.g. a microprocessor 24 and a memory 25, e.g. a ROM. This memory may contain the values g, n, $SK_j$ and a program for controlling microprocessor 24. The verifier unit 30 may also contain a microprocessor 34 and a memory 35, e.g. a ROM. This memory may contain the value n and a program for controlling microprocessor 34.

When said identifier interacts with said verifier the following steps are carried out:

1) The identifier U sends g to V (and $SK_1{}^2$, $SK_2{}^2$, ..., $SK_k{}^{-2}$ if $\varepsilon \#2$ and if this data is not transmitted or known to V by another way);

2) V computes $g^2 \bmod n$ and finds G = $ID\&PK_1\&PK_2\&...\&PK_k$. Then V separates ID and the PK values found in $g^2 \bmod n$.

3) U picks a random $\delta$ in the range $[\sqrt{n}+1, n/2)$, computes E = $\delta^\varepsilon \bmod n$ and sends E to V;

4) V selects a random binary vector v = $(v_1 v_2 ... k_k)$ and sends it to U;

5) Optional - only if a and b are used: Both, V and U, prepare and identical value $\Omega$ (e.g. from v, $\delta$, previously transmitted information, etc);

6) U computes

$$z \;=\; \delta\{a(\Omega)\underset{v_j=1}{\Pi}SK_j + b(\Omega)\underset{v_j=1}{\Pi}SK_j{}^{-1}\} \bmod n$$

and sends z to V;

7) V checks that

$$E\{b(\Omega)\underset{v_j=1}{\Pi}SK_j{}^{-2} + a(\Omega)\}^\varepsilon \;=\; z^\varepsilon \underset{v_j=1}{\Pi}PK_j \bmod n.$$

8) Repeating steps (3) through (7) at least once.

This protocol can be modified in a variety of ways. Namely a variety of polynomial identities can be used instead of equation (1).

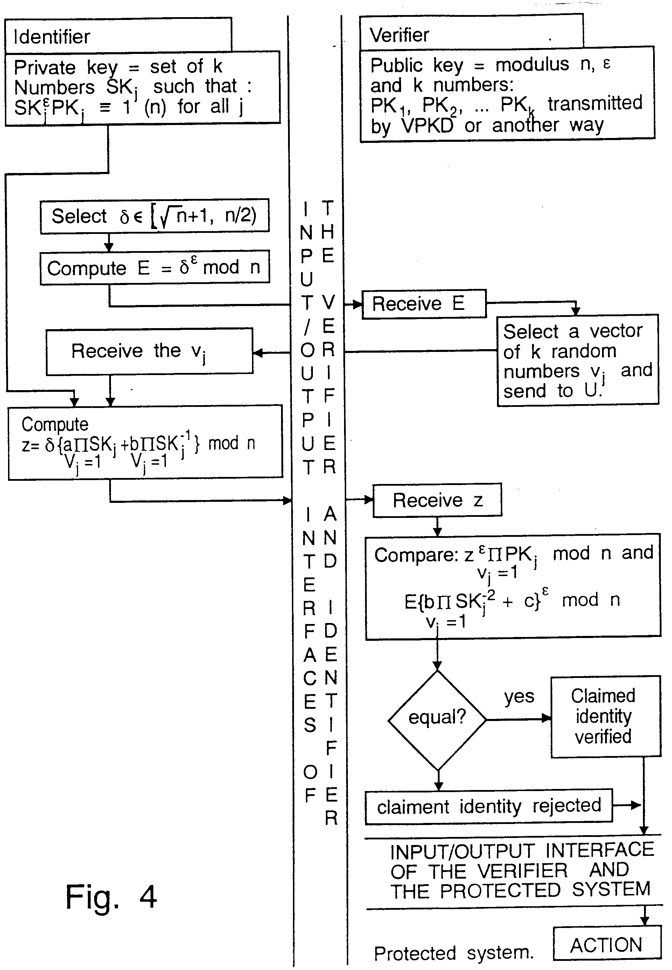

Fig. 4 shows the according authentication protocol.

Supplementary improvements according to the invention are:

1) No pseudo random functions are needed. This requires lower memory capacity (in ROM) and program complexity.

2) All the public key values are computed with a substantial gain in time by a unique computation, whereas in known identification schemes k independent operations, namely f(ID,j), must be carried out.

3) The known pseudo random function f gives $v_j$ of unforeseeable sizes whereas according to the invention it is allowed to choose any $(PK_j, SK_j)$ couple and particularly such couples where both, $SK_j$ and $PK_j$, are of small size.

4) In case of upgrading the known identification system (changements in function f), all the old identifiers become obsolete. Within the invention this problem does not exist since no function f is used.

The authentication protocol or digital signature protocol of Fiat-Shamir mentioned above can also be improved if additional security tests performed by the verifier are carried out after the reception of the indices $j_l$ from the prover. These security tests are that for all

$$1 \leq a < b \leq k, \ j_a \text{ not equal } j_b,$$

and/or

$$1 \leq a < b \leq k, \ v_a \text{ not equal } v_b.$$

## Claims

1. Method for access control, whereby an user (denoted U) and a verifier (denoted V) exchange data and calculate first data using modulo functions of a first number n, whereby n is a product of at least two prime numbers and whereby V compares second numbers which are derived from said first data, **characterized in** that powers and/or inverse powers of secret second data known to V are combined in U with third data known only to U and that multiplications and/or exponentiations are carried out when calculating said first data and/or when calculating said second numbers.

2. Method according to claim 1, **characterized in** that an authority computes fourth data, such as public keys, names, addresses, card numbers and/or dates of validity, and a third number c and combines said fourth data and said third number to a fourth number $G_U$ such that said fourth number has a d-th root $g_U$ modulo n whereby said d-th root $g_U$ is stored in U.

3. Method according to claim 2, **characterized in** that said fourth data and said third number are processed by permutation until said fourth number is a d-th power of said d-th root modulo n.

4. Method according to claim 2 or 3, **characterized in** that the number d of said d-th root has a value of d=2 or d=3.

5. Method according to any of claims 2 to 4, **characterized in** that said fourth data include a public key $PK_U$ and/or a string $ID_U$ which is unique to a specific user or to a specific group of users, whereby said public key, said string and said third number are concatenated to said fourth number $G_U$, $G_U=ID_U\&PK_U\&c$, whereby the character '&' is the concatenation operator.

6. Method according to claim 5, **characterized in** that said public key $PK_U$ and said string $ID_U$ are separated out of said fourth number before said first data are calculated in U and/or V.

7. Method according to claim 5 and 6, **characterized in** that said public key $PK_U$, said string $ID_U$ and said third number are processed with a reversible function when combined by said authority and with the respective inverse function when separated out of said fourth number.

8. Method according to any of claims 2, 4, 5 and 6, **characterized in** that said d-th root $g_U$ is derived by using a sequence of public fifth numbers $\Omega_i$ generated by said authority whereby

$$( ID_U \& PK_U \& c ) = \sum_i g_U^i{}^i \Omega_i \ .$$

9. Method according to any of claims 2 to 8, **characterized in** that said third number has the value. '1'.

10. Method according to any of claims 1 to 9, **characterized in** that the number of bits of said first number n is in the range 450 to 570.

11. Method according to any of claims 1 to 10, comprising the steps of:
    – selecting a public power $\varepsilon$ which is an integer number;
    – selecting k small values $PK_j$, e.g. with a length between 1 and 5 bytes, such that for each j said values $PK_j$ have $\varepsilon$-roots modulo n, said roots hereafter denoted as $SK_J^{-1}$, whereby said values $PK_J$ are not perfect squares in N;
    – computing the inverses $SK_j$ of said $\varepsilon$-roots;
    – selecting a couple of algebraic or electronic functions a and b;
    – recording on a medium for U said d-th root $g_U$, said inverses $SK_j$ and said electronic functions a and b.

12. Method according to claim 11, **characterized in** that all of said U's get the same set of said k $PK_j$ values.

13. Method according to claim 12, **characterized in** that said set of k $PK_j$ values contains the smallest of said $\varepsilon$-roots modulo n.

14. Method according to any of claims 11 to 13, **characterized in** that said recording is carried out with binary data.

15. Method according to any of claims 11 to 14, **characterized in** that said electronic functions a and b are replaced by constants.

16. Method for access control or identification according to any of claims 1 to 15, comprising the steps of:
    a) computing said string $ID_U$ and said k values $PK_U$ in U and evaluating values $SK_j^{-2}$;
    b) selecting a random number $\delta$ in the range $[\sqrt{n}+1,n/2)$;
    c) computing a value $E = \delta^\varepsilon \bmod n$ in U and sending said value E to V;
    d) selecting a random binary vector $v = (v_1 v_2 ... v_k)$ in V and sending said random binary vector to U;
    e) computing in U

$$z = \delta\{a \prod_{\substack{v_j=1}} SK_j + b \prod_{\substack{v_j=1}} SK_j^{-1}\} \bmod n$$

and sending z to V;

f) checking in V that

$$E\{b \prod_{\substack{v_j=1}} SK_j^{-2} + a\}^{\varepsilon} = z^{\varepsilon} \prod_{\substack{v_j=1}} PK_j \bmod n.$$

17. Method for access control or identification according to claim 16, **characterized in** that U and V generate a value $\Omega$, e.g. from said random binary vector v and/or from said random number $\delta$ and/or from data and/or numbers resulting from previous calculations, whereby U computes

$$z = \delta\{a(\Omega) \prod_{\substack{v_j=1}} SK_j + b(\Omega) \prod_{\substack{v_j=1}} SK_j^{-1}\} \bmod n$$

and V checks that

$$E\{b(\Omega) \prod_{\substack{v_j=1}} SK_j^{-2} + a(\Omega)\}^{\varepsilon} = z^{\varepsilon} \prod_{\substack{v_j=1}} PK_j \bmod n.$$

18. Method according to claim 16 or 17, **characterized in** that said steps b) to f) of claim 16 are repeated t times with different random binary vectors v and/or of said random numbers $\delta$, $t \geqq 1$.

19. Method according to any of claims 11 to 18, **characterized in** that the power $\varepsilon$ has a value of $\varepsilon=2$.

20. Method according to any of claims 11 to 19, **characterized in** that k has a value of at least k=18.

21. Method according to any of claims 11 to 20, **characterized in** that t has a value of at least t=4.

22. Method according to any of claims 11 to 21, **characterized in** that the product k*t has a value in the range of 64 to 80.

23. Method according to any of claims 16 to 22, **characterized in** that said steps b) to f) of claim 16 are carried out using binary or trinary logic signals.

24. Method according to any of claims 16 to 23, **characterized in** that either
    – said values $SK_j^2$ and $PK_j$ are transmitted directly from U to V or
    – said values $SK_j^2$ are transmitted via a virtual public key directory to V and said values $PK_j$ are transmitted directly to V or
    – said values $PK_j$ are transmitted via a virtual public key directory to V and said values $SK_j^{-2}$ are transmitted directly to V or
    – said values $SK_j^2$ and $PK_j$ are both transmitted via said virtual public key directory to V.

25. Apparatus for access control or identification using a method according to any of claims 1 to 24, acting as said user U, comprising first memory means (25), first calculating means (24) and first I/O means (21), whereby this apparatus exchanges via said first I/O means data with a second apparatus according to claim 27 or 28 and calculates with said first calculation means a first part of said first data using said modulo functions of said first number n and multiplications and/or exponentiations, thereby generating roots, inverse roots and/or powers of said first part of said first data and of said second data which are combined with said third data using said first calculation means.

26. Apparatus according to claim 25, **characterized in** that said first memory means (25) contain said d-th root $g_U$ modulo n, said first number n and said values $SK_j$.

27. Apparatus for access control or identification using a method according to any one of claims 1 to 24, acting as said verifier V and representing said second apparatus, comprising second memory means (35), second calculating means (34) and second I/O means (31), whereby this apparatus exchanges via said second I/O means data with said apparatus according to claim 25 or claim 26 and calculates with said second calculation means a second part of said first data using said modulo functions of said first number n and compares with said second calculation means said second numbers.

28. Apparatus according to claim 27, **characterized in** that said second memory means (35) contain said first number n.

29. Apparatus using a method according to any of claims 2 to 10, acting as said authority, comprising third calculating means, which generates and combines by said concatenation said fourth data and said third number.

Encryption Computer

11

access-control data

data insertion unit — 121

10 · video (programme)

video scrambler — 122

13

Emitter side

Receiver side

16 data extraction

181 Verifier Unit

182 Card

14

Tuner

15

17 video de-scrambler

19

☐ scrambling system

☐ encryption system

▨ control-access subsystem

# Fig. 1

MEMORY containing g, n and the $SK_j$. **25**

MICROPROCESSOR **24**

SEND g to the verifier

Select $\delta_i \equiv [\sqrt{n}+1,\ n/2)$

Compute $E_i = \delta_i^{\varepsilon} \bmod n$

Receive the $v_{ij}$ from V

Compute

$$z_i = \delta_i \{ a \prod_{v_{ij}=1} SK_j + b \prod_{v_{ij}=1} SK_j^{-1} \} \bmod n$$

Send $z_i$ to V

Repeat for i = 1, 2, ... t

**20**

I/O interface **21**

I/O interface **31**

Verifier **30**

# Fig. 2

MEMORY containing n. $^{35}_j$

34

Receive g from U

Compute $G = g^2 \bmod n$

Extract the $PK_j$ out of G for $j = 1, 2, \dots k$

Receive $E_i$ from U

Generate random $v_{ij}$

Send the $v_{ij}$ to U

Receive the $z_i$

Check that

$$E_i \{b \prod_{v_{ij}=1} SK_j + a\}^{\varepsilon} = z_i^{\varepsilon} \prod_{v_{ij}=1} PK_j \bmod n$$

Repeat for $i = 1, 2, \dots t$

30          31

I/O interface

I/O interface

Identifier

21          20

Fig. 3

**Identifier**

Private key = set of k Numbers $SK_j$ such that : $SK_j^\varepsilon PK_j \equiv 1$ (n) for all j

**Verifier**

Public key = modulus n, $\varepsilon$ and k numbers: $PK_1$, $PK_2$, ... $PK_k$ transmitted by VPKD or another way

Select $\delta \in [\sqrt{n}+1, n/2)$

Compute $E = \delta^\varepsilon$ mod n

Receive E

Receive the $v_j$

Select a vector of k random numbers $v_j$ and send to U.

Compute
$$z = \delta\{a\prod_{V_j=1}SK_j + b\prod_{V_j=1}SK_j^{-1}\} \text{ mod } n$$

Receive z

Compare: $z^\varepsilon \prod_{v_j=1} PK_j$ mod n and

$E\{b\prod_{v_j=1} SK_j^{-2} + c\}^\varepsilon$ mod n

equal? —— yes —→ Claimed identity verified

claiment identity rejected

INPUT/OUTPUT INTERFACES OF THE VERIFIER AND IDENTIFIER

INPUT/OUTPUT INTERFACE OF THE VERIFIER AND THE PROTECTED SYSTEM

Protected system.

ACTION

# Fig. 4

R' s
Knowledge:

VPKD seed
SK

Transmit R' s claimed identity

S' s
Knowledge:

R' s claimed ID

← VPKD exchange
pre-protocol →

← Host protocol →

R' s claimed PK
ID corresponds
with PK or not

R' s ID is
correct or not

↓ time

# Fig.5

Prepare $ID_U$ and $PK_U$

61

Pick a c such that:

$G_U = ID_U \& PK_U \& c \equiv g_U^d \mod n.$

63

n

62

Issue an identifier
containing $g_U$ and n

64

# Fig. 6

Receiver.                            Sender.

Please send your $g_U$

$g_U$

Compute:

$G_U = g_U^d \mod n$

Infer $ID_U$ and $PK_U$

——————— Host protocol.

············· VPKD protocol.

# Fig. 7

R's
Knowledge:

VPKD seed
SK

VPKD exchange
pre-protocol

Host protocol

message

S's
Knowledge:

message

R's claimed ID
R's claimed PK

time

## Fig. 8

## European Patent Office

# EUROPEAN SEARCH REPORT

Application Number

EP 92 20 0119

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP-A-0 325 238 (YEDA RESEARCH AND DEVELOPMENT COMPANY)<br>* abstract; claims; figures *<br>--- | 1-3,16, 25-29 | G07F7/10<br>H04L9/32 |
| A | S.GOLDWASSER (EDITOR) 'Lecture Notes in Computer Science - Advances in cryptology - CRYPTO '88 Proceedings' , SPRINGER-VERLAG , BERLIN<br>An Improvement of the FIAT-SHAMIR Identification and Signature Scheme. (Adi Shamir & Silvio Micali)<br>* page 244 - page 247 *<br>--- | 1-7, 25-29 | |
| A | EP-A-0 389 895 (YEDA RESEARCH AND DEVELOPMENT COMPANY)<br>* abstract; claims; figures *<br>--- | 1-5, 25-29 | |
| A | EP-A-0 384 475 (SCHNORR)<br><br>* the whole document *<br>--- | 1-3, 25-27 | |
| A | WO-A-8 911 706 (NCR CORPORATION)<br>* the whole document *<br>--- | 1,25 | TECHNICAL FIELDS SEARCHED (Int. Cl.5) |
| A | US-A-4 354 201 (SECHET ET.AL.)<br>* abstract; claims *<br>--- | 1,25 | G07F<br>H04L<br>H04N |
| A | EP-A-0 383 985 (SCHNORR)<br>* abstract; claims *<br>--- | 1 | |
| A | WO-A-8 802 899 (THOMSON-CSF)<br><br>----- | | |

The present search report has been drawn up for all claims

| Place of search | Date of completion of the search | Examiner |
|---|---|---|
| THE HAGUE | 20 MAY 1992 | GUIVOL O. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0404)

18